# EUROPÄISCHE PATENTSCHRIFT

(11) **EP 0 857 195 B1**
(45) Veröffentlichungstag und Bekanntmachung des Hinweises auf die Patenterteilung: **13.08.2008**
(21) Anmeldenummer: 96937270.5
(22) Anmeldetag: 28.10.1996
(51) Int. Cl.: C09D 5/03, C09D 7/06

(54) **VERLAUFMITTEL FÜR PULVERLACKE**
LEVELLING AGENTS FOR POWDER COATINGS
PRODUIT NIVELANT POUR PEINTURES PULVERULENTES

(30) Priorität: 28.10.1995 DE 19540313
(43) Veröffentlichungstag der Anmeldung: 12.08.1998
(73) Patentinhaber: BASF Coatings AG, 48165 Münster (DE)
(72) Erfinder: FOUKES, Rick, Sterling Heights, MI 48314 (US); CIBURA, Klaus, D-48167 Münster (DE); BOYSEN, Rolf, D-48163 Münster (DE); RADEMACHER, Josef, Beverly Hills, MI 48025 (US)
(86) Internationale Anmeldenummer: PCT/EP1996/004684
(87) Internationale Veröffentlichungsnummer: WO 1997/016494

(56) Entgegenhaltungen:
- US-A- 5 187 201

## Beschreibung

Die Erfindung betrifft einen Pulverlack, der durch den Einsatz eines Verlaufmittels verbesserte Oberflächeneigenschaften aufweist.

Seit einigen Jahren finden sogenannte Pulverlacke ein immer größeres Einsatzgebiet. Pulverlacke liegen in Form eines trockenen Pulvers vor, das in der Regel mit Hilfe elektrostatischer Aufladung auf der Oberfläche des zu beschichtenden Gegenstandes fein verteilt aufgebracht und anschließend getrocknet", d.h. eingebrannt wird. Beim Einbrennen, das üblicherweise bei Temperaturen zwischen 130 und 220 °C erfolgt, entsteht durch Vernetzungsreaktionen und Filmbildung der feste Lacküberzug auf dem Werkstück. Derartige Pulverlacke bieten eine Reihe von Vorteilen. So entfällt aufgrund der pulverförmigen Konsistenz des Lackes die Notwendigkeit, mit Lösemitteln zu arbeiten. Demgemäß entfallen bei Pulverlacken sämtliche Umweltprobleme, die üblicherweise mit dem Verdampfen der Lösemittel einhergehen. Zudem wird die sonst für das Verdampfen der Lösemittel notwendige Heizenergie eingespart. Ein weiterer Vorteil von Pulverlacken besteht darin, daß Material, das nicht am Werkstück haften geblieben ist, am Boden der Pulverkabine aufgefangen und problemlos erneut verwendet werden kann. Auf diese Weise kann ein Pulvernutzungsgrad von bis zu 98 % erreicht werden. Neben Kostenvorteilen bringt dieser erhöhte Nutzungsgrad auch eine weitaus geringere Belastung der Umwelt als bei üblichen Lacken mit sich.

Pulverlacke werden aus Bindemitteln, Härtern, Füllstoffen, Pigmenten und Additiven hergestellt. Bezüglich der verwendeten Bindemittel und Härter basieren die heutigen Pulverlacke in der Regel auf einer der folgenden Polymerklassen: Epoxide; Epoxid-Polyester-Gemische; Polyester; Polyester/Isocyanate (Polyurethane) Acrylate.

Problematisch bei der Anwendung von Pulverlacken ist jedoch das Erzielen einer Oberfläche mit hinreichend guten Eigenschaften. So treten in der Regel beim eingebrannten Pulverlackfilm erhebliche Störungen auf, die die Oberflächenglätte herabsetzen. Diese Oberflächenstörungen resultieren u.a. aus der Tatsache, daß das unregelmäßig mit einer eigenen Struktur aufgebrachte Pulver des Lackes beim Einbrennen nicht ausreichend Zeit hat, während seiner flüssigen Phase (mit einem minimalen Wert der Viskosität) zu zerfließen und dabei die Oberfläche des Werkstückes gleichmäßig zu bedecken. Denn gleichzeitig mit dem Schmelzen und dem Erreichen des Viskositätsminimums beginnt die Vernetzung der Bindemittel und damit die Polymerisation des Lackes. Eine weitere wichtige Ursache für unregelmäßige Lackoberflächen sind Verunreinigungen des Pulverlackes.

Zur Verbesserung der Oberflächenglätte von Beschichtungen aus Pulverlack werden bereits seit längerem Additive eingesetzt. Bevorzugt werden für diese Zwecke Acrylathetero- und Homopolymere im Molekulargewichtsbereich von Mw = 5 000 bis 200 000 eingesetzt. Typische Beispiele sind hierfür Acronal 4 F® und Byk-360 P® (Acronal 4 F® ist eine Marke der BASF AG; Byk-360 P® ist eine Marke der Firma. Byk-Chemie).

Acronal 4 F® ist ein Polyacrylsäure-n-butylester. Laut Spezifikation ist dieses Additiv lösemittelfrei und hat nicht-flüchtige Anteile von weniger als 1,5% bei 30 min 140°C. Es ist ein schwer verseifbares, zähklebriges Weichharz mit ausgezeichneter Licht- und Alterungsbeständigkeit. Allein verwendet ergibt Acronal 4 F® einen klebrigen Film von geringer Festigkeit.

Byk-360 P® ist ein Acrylatpolymer aufgebracht auf eine spezielle Kieselsäure. Die Wirksubstanz ist mit 60% zu einem weißen, rieselfähigen Pulver compoundiert. Dieses Verlaufsadditiv ist ebenso wirksam in Pulverlacken auf Basis Epoxi, Acrylat, Polyester und Polyurethan. Es wird mit Harz, Härter und Pigmenten gemischt und dann mit allen Komponenten extrudiert.

Gelegentlich werden auch niedermolekulare Polyester verwendet. Die somit erzielten Ergebnisse erfüllen jedoch noch nicht die an die Oberfläche gestellten Anforderungen. Zudem weisen derartige Oberflächen im ungeschliffenen Zustand eine oft unbefriedigende Überlackierbarkeit auf.

Die Beschichtung von Autorädern aus Stahl oder Aluminium ist ein Mehrschichtaufbau. Pulverlack ist hierbei ein Bestandteil und kann in den Aufbauten als Grundierpulverlack, Metallicpulverlack oder Klarpulverlack zum Einsatz kommen. Je nach Spezifikation oder Design wird dabei Flüssiglack und Pulverlack im Aufbau kombiniert. In jedem dieser Fälle wird ein extrem guter Verbund zwischen den einzelnen Lackschichten gefordert, sei es zwischen den Pulverlackschichten selbst oder zwischen Pulverlack und Flüssiglack. Der Schichtaufbau Grundierpulver plus Base- und Clear-Coat hat sich besonders bewährt.

Mindestens gleich hohe Anforderungen werden an die Beschichtung einer Automobilkarosse gestellt. Hier wird ebenfalls Pulverlack als Grundierung oder als Decklack eingesetzt. Speziell im Bereich der Motorhaube kommt es auf besonders guten, glatten Verlauf an mit gleichzeitig extrem guter Zwischenhaftung im gefährdeten Bereich der Steinschlagzone.

Die vorliegende Erfindung hat sich die Aufgabe gestellt, Pulverlacke bzw. Verlaufmittel für Pulverlacke zur Verfügung zu stellen, die gegenüber dem Stand der Technik in Hinblick auf die oben genannten Anforderungen an Verbundeigenschaften und Verlauf verbessert sind, und mit denen es insbesondere bei der Überlackierung keine Benetzungs- und Haftungsstörungen mehr gibt.

Diese Aufgabe wird erfindungsgemäß durch einen Pulverlack gelöst, der dadurch gekennzeichnet ist, daß er 0,05 bis 5 Gew.-%, vorzugsweise 0,5 bis 1,5 Gew.-% homopolymere Polyvinylethylether enthält. Der Zusatz des Polyvinylethers kann bereits während der Herstellung des Pulverlacks erfolgen. Ebenso ist auch ein Zusatz zu einem späteren Zeitpunkt möglich.

Durch den Einsatz von Polyvinylethern konnte überraschend eine erhebliche Verbesserung der Oberflächeneigenschaften von Pulverlacken erzielt werden. Besonders überraschend und vorteilhaft ist es, daß der Pulverlack mit den derartig verbesserten Oberflächeneigenschaften gleichzeitig besser mit flüssigen Systemen überlackierbar ist. Bei einer derartigen Überlackierung treten keine Benetzungs- und Haftungsstörungen mehr auf.

Die Polyvinylethylether sind Polymere mit dem Grundbaustein 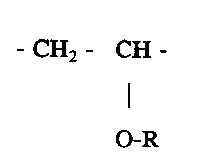 worin R für ethyl steht Der Polyvinylethylether als Homopolymer hat eine Molmassenverteilung von Mₙ = 800 - 10000, bevorzugt 1000 - 5000, besonders bevorzugt 1000 - 3000 vorliegen.

Der Pulverlack kann neben dem erfindungsgemäßen Additiv des Polyvinylethers ansonsten sämtliche gängige Pulverlacktypen enthalten, insbesondere auf der Basis von Epoxidharzen, Epoxid-Polyester-Gemischen, Polyestern, Polyurethanen und/oder Acrylatharzen.

Bekannte Lackformulierungen finden sich z.B. in der EP-509 392, EP-509 393, EP-322 827, EP-517 536, US-5,055,524 und US-4,849,283. Insbesondere kann der Pulverlack bestehen aus Epoxidharzen, auch epoxidierten Novolacken, aus Vernetzungsmitteln, vorzugsweise phenolischen oder aminischen Härtern oder bicyclischen Guanidinen, Katalysatoren, Füllstoffen sowie ggf. Hilfsmitteln und Additiven.

Die erfindungsgemäß eingesetzten Pulverlacke können z.B. Epoxidharze, phenolische Vernetzungsmittel, Katalysatoren, Hilfsstoffe sowie ggf. Hilfsmittel und pulvertypischen Additive, Rieselhilfen enthalten.

Geeignete Epoxidharze sind alle festen Epoxidharze mit einem Epoxiäquivalentgewicht zwischen 400 und 3.000 vorzugsweise 600 bis 2.000. Dabei handelt es sich hauptsächlich um Epoxidharze auf Basis von Bisphenol A und Bisphenol F oder expoxidierte Novolackharze. Diese weisen vorzugsweise ein Epoxidäquivalentgewicht von 500 bis 1.000 auf.

Die Epoxidharze auf Basis von Bisphenol A und Bisphenol F weisen im allgemeinen eine Funktionalität von kleiner 2, die epoxidierten Novolackharze eine Funktionalität von größer 2 auf. Besonders bevorzugt werden in den erfindungsgemäßen Pulverlacken epoxidierte Novolackharze mit einem mittleren Funktionalität im Bereich von 2,4 bis 2,8 und mit einem Epoxidäquivalentgewicht im Bereich von 600 bis 850. Bei den epoxidierten Novolackharzen sind die phenolischen Hydroxylgruppen mit Alkyl-, Acryl- oder ähnlichen Gruppen verethert. Durch Umsetzung der phenolischen Hydroxylgruppen mit Epichlorhydriden werden Epoxidgruppen in das Molekül eingebracht. Ausgehend von Novolacken bildet sich dabei der sog. Epoxid-Novolack. Die epoxidierten Novolacke sind strukturverwandt mit Bisphenol A-Harzen. Epoxidierte Novolackharze können hergestellt werden durch Epoxidierung von Novolacken, die z.B. aus 3 bis 4 Phenolkernen, welche über Methylenbrücken miteinander verbunden sind, bestehen. Als Novolackharze können auch alkylsubstituierte Phenole, welche mit Formaldehyd umgesetzt werden, verwendet werden.

Geeignete Epoxidharze sind beispielsweise die unter folgenden Namen im Handel erhältlichen Produkte:
Epikote 1004, 1055, 3003, 3004, 2017 der Firma Shell-Chemie, DEH 640, 671, 662, 663U, 664, 667 der Firma Dow sowie Araldit GT 6063, 6064, 6084, 6097, 7004, 7220, 7225 der Firma Ciba Geigy.
Zur Aushärtung der Epoxidharze enthält der erfindungsgemäße Pulverlack phenolische oder aminische Härter. Zum Einsatz kommen können auch bicyclische Guanidine.

Dabei kann beispielsweise jedes beliebige Phenolharz verwendet werden, solange es die für Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder para-ständig mit dem aromatischen Ring verknüpft. Besonders bevorzugt werden gemäß der vorliegenden Erfindung als phenolische Vernetzungsmittel hydroxylgruppenhaltige Bisphenol-A- oder Bisphenol-F-Haize mit einem Hydroxyäquivalentgewicht im Bereich von 180 bis 600, besonders bevorzugt im Bereich von 180 bis 300, eingesetzt. Derartige phenolische Vernetzungsmittel werden hergestellt durch Umsetzung von Bisphenol-A oder Bisphenol-F mit glycidylgruppenhaltigen Komponenten, wie z.B. dem Diglycidylether von Bisphenol-A. Derartige phenolische Vernetzungsmittel sind beispielsweise erhältlich unter der Handelsbezeichnung DEH 81, DEH 82 und DEH 87 der Firma Dow DX 171 der Firma Shell-Chemie und XB 3082 der Firma Ciba Geigy.

Die Epoxidharze und die phenolischen Vernetzungsmittel werden dabei in einem derartigen Verhältnis eingesetzt, daß die Zahl der Epoxidgruppen zur Zahl der phenolischen OH-Gruppen in etwa 1 : 1 beträgt.

Die erfindungsgemäßen Pulverlacke enthalten einen oder mehrere geeignete Katalysatoren für die Epoxidharz-Aushärtung. Geeignete Katalysatoren sind Phosphoniumsalze organischer oder anorganischer Säuren, Imidazol und Imidazolderivate, quartäre Ammoniumverbindungen sowie Amine. Die Katalysatoren werden im allgemeinen in Anteilen von 0,001 Gew.-% bis etwa 10 Gew.-%, bezogen auf das Gesamtgewicht des Epoxidharzes und des phenolischen Vernetzungsmittels, eingesetzt.

Beispiele für geeignete Phosphoniumsalz-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium Katalysatoren sind z.B. beschrieben in US-PS 3, 477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Zum Teil enthalten handelsübliche phenolische Vernetzungsmittel bereits Katalysatoren für die Epoxidharz-Vernetzung.

Für Pulverklarlacke sind als epoxifunktionelles Bindemittel beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist.

Epoxidgruppenhaltige Polyacrylatharze sind bekannt (vgl. z.B. EP-A-299 420, DE-B-22 14 650, DE-B-27 49 576, US-A-4, 091,048 und US-A-3, 781, 379). Als Beispiele für die ethylenisch ungesättigte Monomere, die mindestens eine Epoxidgruppe im Molekül enthalten, werden Glycidylacrylat, Glycidylmethacrylat und Allylglycidylether genannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethylacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säuren, wie z.B. Acrylsäure und Methacrylsäure. Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaldge Polyacrylatharz weist üblicherweise ein Epoxidäquivalentgewicht von 400 bis 2.500, vorzugsweise 500 bis 1.500, besonders bevorzugt 600 bis 1.200, ein zahlenmittleres Molekulargewicht (gelpermeationschromatographisch unter Verwendung eines Polystyrolstandards bestimmt) von 1.000 bis 15.000, vorzugsweise von 1.200 bis 7.000, besonders bevorzugt von 1.500 bis 5.000 und eine Glasübergangstemperatur (TG) von 30 bis 80, vorzugsweise von 40 bis 70, besonders bevorzugt von 50 bis 70°C auf (gemessen mit Hilfe der differential scanning calometrie (DSC)).

Das epoxidgruppenhaltige Polyacrylatharz kann nach allgemein gut bekannten Methoden durch radikalische Polymerisation hergestellt werden.

Als Härter für das epoxidgruppenhaltige Polyacrylatharz geeignet sind beispielsweise Polyanhydride von Polycarbonsäuren oder von Mischungen aus Polycarbonsäuren, insbesondere Polyanhydride von Dicarbonsäuren oder von Mischungen aus Dicarbonsäuren.

Derartige Polyanhydride sind herstellbar, indem der Polycarbonsäure bzw. der Mischung aus Polycarbonsäuren Wasser entzogen wird, wobei jeweils zwei Carboxylgruppen zu einer Anhydridgruppe umgesetzt werden. Derartige Herstellungsverfahren sind gut bekannt und brauchen daher nicht näher erläutert zu werden.

Die erfingungsgemäß eingesetzten Pulverlacke können z.B. auch Epoxid/Polyester-Gemische als Bindemittelbasis enthalten. Solche Pulverlacke können z.B.
A) mindestens einen Polyester mit einer Säurezahl von 25 bis 120 m g KOH/g und
B) mindestens ein Epoxidharz mit einem Epoxidäquivalentgewicht von 400 - 3000
enthalten.

Geeignete Polyestertypen nach A) sind kommerziell im Handel erhältlich. Beispiel hierfür sind:Crylcoat 314, 316, 340, 360 der Firma UCB, Uralac P2450, P2980, P3560 der Firma DSM.

Geeignete Epoxidharze sind beispielsweise die unter folgenden Namen im Handel erhältlichen Produkte: Epikote 1055, 1004, 1007, 3003, 3003-FCA-10 der Firma Shell-Chemie, DER 662 UE, 664, 642, 672 der Firma Dow-Chemie oder Araldit GT 6061, GT 6064, GT 7072, GT 7004 der Firma Ciba-Geigy.

Die erfingungsgemäß eingesetzten Pulverlacke können auch Gemische von COOH-funktionalisierten Polyestern und geeigneten Vernetzungsmitteln enthalten. Beispiele für geeignete Vernetzungsmittel sind folgende in Handel erhältliche Produkte: Araldit PT 810, PT 910 der Firma Ciba-Geigy und Primid XL 552 der Firma Ems-Chemie.

COOH-funktionalisierte Polyester, die für die genannten Vernetzungsmittel geeignet sind, können in Handel z.B. unter den folgenden Bezeichnungen erhalten werden: Uralac P 2200, P 3485, P 3400, P 5000, P 6000, P 6600 der Firma DSM oder Crylcoat 800, 802, 803, 810, 491, 430, 440, 490, 620 der Firma UCB.

Die erfingungsgemäß eingesetzten Pulverlacke können auch Gemische von OHfunktionalisierten Polyestern oder Polyacrylatbindemitteln und geeigneten Härtern auf der Basis von Polyisocyanaten enthalten.

Beispiele für geeignete Polyisocyanathärter sind folgende kommerziell verfügbare Produkte: Vestagon BF 1300, BF 1540, B 1065 der Firma Hüls. Beispiele für geeignete OH-funktionalisierte Polyester sind folgende kommerziell verfügbare Produkte: Uralac P 1480, P 2115, P 2504, P 5504, P 1550 der Firma DSM, Crylcoat 240, 290, 291, 2383, 690 der Firma UCB.

Ein Beispiel für ein kommerziell verfügbares OH-funktionalisiertes Polyacrylatbindemittel ist Joncryl 587 der Firma SC Johnson.

Die Pulverlacke enthalten 50 bis 90 %, vorzugsweise 60 bis 80 Gew.-% Bindemittel und 10 bis 50 Gew.-%, vorzugsweise 20 bis 40 Gew.-% Füllstoffe.

Als Füllstoffe kommen z.B. glycidylgruppenfunktionalisierte kristalline Kieselsäuremodifikationen in Betracht. Üblicherweise werden sie in dem genannten Bereich von 10 bis 50 Gew.-%, bezogen auf das Gesamtgewicht des Pulverlackes eingesetzt. In einigen Fällen sind jedoch auch Füllstoffanteile von mehr als 50 Gew.-% möglich.

Zu den kristallinen Kieselsäure-Modifikationen zählen Quarz, Cristobalit, Tridymit, Keatit, Stishovit, Melanophlogit, Coesit und faserige Kieselsäure. Die kristallinen Kieselsäure-Modifikationen sind glycidylgruppenfunktionalisiert, wobei die Glycidylgruppenfunktionalisierung durch eine Oberflächenbehandlung erzielt wird. Es handelt sich dabei beispielsweise um Kieselsäure-Modifikationen auf der Basis von Quarz, Cristobalit und Quarzgut, die hergestellt werden durch Behandlung der kristallinen Kieselsäure-Modifikationen mit Epoxisilanen. Die glycidylgruppenfunktionalisierten Kieselsäure-Modifikationen sind auf dem Markt beispielsweise erhältlich unter der Bezeichnung Silbond^{R} 600 EST und Silbond^{R} 6000 EST (Hersteller: Quarzwerke GmbH) und werden hergestellt durch Umsetzung von kristallinen Kieselsäure-Modifikationen mit Epoxisilanen.

Die Pulverlacke können noch weitere anorganische Füllstoffe, beispielsweise Titanoxid, Bariumsulfat und Füllstoffe auf Silikatbasis, wie z.B. Talkum, Kaolin, Magnesium-, Aluminiumsilikate, Glimmer und ähnliche enthalten. Außerdem können die Pulverlacke ggf, noch Hilfsmittel und Additive enthalten. Beispiele hierfür sind Verlaufsmittel, Rieselhilfen und Entgasungsmittel, wie beispielsweise Benzoin.

Die Herstellung der Pulverlacke erfolgt nach bekannten Methoden (vgl. z.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben auf die gewünschte Korngrößenverteilung eingestellt.

Die vorliegende Erfindung betrifft auch ein Verfahren zur Herstellung von Pulverlacken, das dadurch gekennzeichnet ist, daß dem Pulverlacken 0,05 bis 5 Gew. %, vorzugsweise 0,5 bis 1,5 Gew. % der homopolymere Polyvinylethylether zugegeben werden.

ErFmgungsgemäß ist es möglich zu beliebigen Zeitpunkten den Polyvinylethylether dem Pulverlacken zuzusetzen, d.h. der Polyvinylethylether kann sowohl bei der Herstellung des Pulverlacks als auch erst unmittelbar vor der Anwendung desselben zugegeben werden. Eine nach dem erfindungsgemäßen Verfahren hergestellte Pulverlackbeschichtung weist überraschende Verbesserungen hinsichtlich der Oberflächengüte bzw. -glätte und hinsichtlich der Haftungseigenschaften für eine nachfolgende Überzugslackierung auf.

Vorzugsweise wird bei dem erfindungsgemäßen Verfahren ein homopolymer Polyvinylethylether, mit einer Molmassenverteilung von Mₙ = 1000 - 5000, besonders bevorzugt 1000 - 3000 eingesetzt.

Das erfindungsgemäße Verfahren ist für alle gängigen Pulverlacktypen anwendbar, insbesondere mit denen auf der Basis von Epoxidharzen, Epoxid-Polyester-Gemischen, Polyestern, Polyurethanen und/oder Acrylatharzen.

Die Erfindung betrifft ferner einen Additiv zur Verbesserung der Oberflächeneigenschaften von Pulverlacken, welches dadurch gekennzeichnet ist, daß es den homopolymeren Polyvinylethylether, enthält.

Schließlich betrifft die Erfindung auch die Verwendung des Additivs zur Verbesserung der Oberflächeneigenschaften von Pulverlacken.

Das Additiv kann dem Pulverlack in verschiedenen Stadien einer Pulverlackierung zugegeben werden. Dies kann bei der Herstellung des Pulverlacks, aber auch erst unmittelbar vor dem Aufbringen der Lackierung geschehen. Auf diese Weise ist es dem Anwender überlassen, durch eine entsprechende Dosierung des Additivs die Verlaufseigenschaften seines Pulverlackes zu steuern.

Das erfindungsgemäße Additiv kann neben dem Polyvinylethylether übliche Entgasungsmittel, Mattierungsadditive, Wachse zur Beeinflussung der Oberflächenhärte, Struktur- und Texturadditive sowie Katalysatoren und Rieselhilfen enthalten.

## Patentansprüche

1. Pulverlack **dadurch gekennzeichnet, dass** er 0,05 bis 5 Gew.-% homopolymere Polyvinylethylether mit einer Molmassenverteilung von Mn = 800 bis 10.000].

2. Pulverlack nach Anspruch 1, **dadurch gekennzeichnet, dass** er 0,5 bis 1,5 Gew.-% homopolymere Polyvinylethylether enthält.

3. Pulverlack nach Anspruch 1 oder 2, **dadurch gekennzeichnet, dass** der Polyvinylethylether ein Homopolymer mit einer Molmassenverteilung von Mn = 1000 bis 5000 ist.

4. Pulverlack nach Anspruch 3, **dadurch gekennzeichnet, dass** der Polyvinylethylether ein Homopolymer mit einer Molmassenverteilung von Mn= 1000 bis 3000 ist.

5. Pulverlack nach einem der Ansprüche 1 bis 4, **dadurch gekennzeichnet, dass** es sich um einen Pulverlack auf Basis von Epoxidharzen, Epoxid-Polyester-Gemischen, Polyestern, Polyurethanen und/oder Acrylatharzen handelt.

6. Verfahren zur Herstellung von Pulverlacken gemäß einem der Ansprüche 1 bis 5, **dadurch gekennzeichnet, dass** einem Pulverlack homopolymere Polyvinylethylether, wie in einem der Ansprüche 1 bis 4 definiert, zugegeben werden, so dass der Pulverlack 0,05 bis 5 Gew. -% Polyvinylethylether enthält.

7. Verwendung der homopolymeren Polyvinylethylether, wie in einem der Anspruche 1 bis 4 definiert, zur Verbesserung der Oberflächeneigenschaften von Pulverlacken.

## Claims

1. Powder coating **characterized in that** it contains from 0.05 to 5% by weight of homopolymeric polyvinyl ethyl ethers having a molecular mass distribution of Mn = 800 to 10,000.

2. Powder coating according to Claim 1, **characterized in that** it contains from 0.5 to 1.5% by weight of homopolymeric polyvinyl ethyl ethers.

3. Powder coating according to Claim 1 or 2, **characterized in that** the polyvinyl ethyl ether is a homopolymer having a molecular mass distribution of Mn = 1000 to 5000.

4. Powder coating according to Claim 3, **characterized in that** the polyvinyl ethyl ether is a homopolymer having a molecular mass distribution of Mn = 1000 to 3000.

5. Powder coating according to one of Claims 1 to 4, **characterized in that** it is a powder coating based on epoxy resins, epoxy/polyester mixtures, polyesters, polyurethanes and/or acrylate resins.

6. Process for the preparation of powder coatings according to one of Claims 1 to 5, **characterized in that** homopolymeric polyvinyl ethyl ethers are added to a powder coating as defined in one of Claims 1 to 4, so that the powder coating contains from 0.05 to 5% by weight of polyvinyl ethyl ethers.

7. Use of the homopolymeric polyvinyl ethyl ethers as defined in one of Claims 1 to 4 for improving the surface properties of powder coatings.

## Revendications

1. Peinture en poudre, **caractérisée en ce qu'**elle contient de 0,05 à 5 % en poids de polyvinyléthyléthers homopolymères ayant une distribution de masse moléculaire de Mn = 800 à 10 000.

2. Peinture en poudre selon la revendication 1, **caractérisée en ce qu'**elle contient de 0,5 à 1,5 % en poids de polyvinyléthyléthers homopolymères.

3. Peinture en poudre selon la revendication 1 ou 2, **caractérisée en ce que** le polyvinyléthyléther est un homopolymère ayant une distribution de masse moléculaire de Mn = 1 000 à 5 000.

4. Peinture en poudre selon la revendication 3, **caractérisée en ce que** le polyvinyléthyléther est un homopolymère ayant une distribution de masse moléculaire de Mn = 1 000 à 3 000.

5. Peinture en poudre selon l'une quelconque des revendications 1 à 4, **caractérisée en ce qu'**il s'agit d'une peinture en poudre à base de résines époxy, de mélanges époxyde-polyester, de polyesters, de polyuréthannes et/ou de résines acrylate.

6. Procédé pour la préparation de peintures en poudre selon l'une quelconque des revendications 1 à 5, **caractérisé en ce qu'**on ajoute à une peinture en poudre des polyvinyléthyléthers homopolymères tels que définis dans l'une quelconque des revendications 1 à 4, de sorte que la peinture en poudre contient de 0,05 à 5 % en poids de polyvinyléthyléther.

7. Utilisation des polyvinyléthyléthers homopolymères tels que définis dans l'une quelconque des revendications 1 à 4, pour l'amélioration des propriétés de surface de peintures en poudre.
